# EUROPÄISCHE PATENTANMELDUNG

(11) **EP 2 910 710 A1**
(43) Veröffentlichungstag der Anmeldung: **26.08.2015**
(21) Anmeldenummer: 15155951.5
(22) Anmeldetag: 20.02.2015
(51) Int. Cl.: E04G 21/20, C04B 40/06

(54) **Wintermörtel, sowie Verfahren zur Herstellung und Verarbeitung desselben**

(30) Priorität: 25.02.2014 DE 102014002621
(71) Anmelder: rent a scientist GmbH, 93055 Regensburg (DE)
(72) Erfinder: Nusko, Robert, 93109 Wiesent (DE); Parzl, Adolf, 93055 Regensburg (DE); Maier, Georg, 93047 Regensburg (DE); Zech, Oliver, 93047 Regensburg (DE)
(74) Vertreter: Graf Glück Kritzenberger

(57) **Zusammenfassung**

Beschrieben wird ein Wintermörtel in Form eines trockenen Mörtelauftrages insbesondere in Form eines Mörtelbandes, Mörtelplatte oder lose Mörtelaggregate, dadurch gekennzeichnet dass durch die Aktivierung mit Wasser eine Wärmemenge von mindestens 50 kJ/kg Mörtel, bevorzugt mindestens 100 kJ/kg , besonders bevorzugt mindestens 150 kJ/kg freigesetzt wird.

## Beschreibung

### Technisches Gebiet

Die Erfindung bezieht sich auf einen Wintermörtel, sowie ein Verfahren zur Herstellung und Verarbeitung des Wintermörtels.

### Stand der Technik

Die wesentlichen Parameter, die ein Verarbeiten von Beton oder Mörtel bei kalten Temperaturen und Minusgraden erschweren bzw. unmöglich machen, sind die verkürzte Standzeit eines angerührten Mörtels bzw. das beschleunigte Abbinden beim Erhöhen der Temperatur und / oder Zusatz von Abbindebeschleunigern. Nach dem Aufbringen des Mörtels oder Betons kühlt die Mischung sehr schnell ab. Dadurch wird die Abbindezeit erheblich verlängert, das Erreichen einer ausreichenden Festigkeit und ein Abbinden werden nicht gewährleistet. Dies liegt daran, dass Mörtel bei Temperaturen unter 0 °C nicht aushärtet bzw. Frostschäden auftreten.

Konventioneller Dünnbettmörtel wird mit Hilfe eines Mischers angerührt und anschließend mit einem Mörtelschlitten aufgetragen. Dies ist bei Minusgraden nicht möglich, da nach dem Anrühren durch die relativ lange Standzeit der Versatz schnell unter 0 °C abkühlt. Der Zusatz von beispielsweise warmem Wasser führt zu schnellem Aushärten bzw. "Verbrennen" vor dem Aufbringen auf den Ziegel, berücksichtigt man die Standzeit des Versatzes während der Verarbeitung. Des Weiteren ist in der Regel kein warmes Wasser auf der Baustelle verfügbar.

DD 279 665 A1 beschreibt ein Verfahren zur Herstellung frostbeständiger Beton- und Mörtelbauten mittels Verwendung eines überseiften Alkalisalzes eines Talharzes oder methylolisierten Talharzes im Gemisch mit einer Trimethyloctadecylammoniumverbindung. Dadurch werden im Wesentlichen Anzahl, Größe und Abstand der Luftporen im ausgehärteten Mörtel variiert. Dadurch besteht eine erhöhte Beständigkeit gegenüber Frost. Das Verfahren stellt aber keine Lösung für eine Verarbeitung des Mörtels bei Temperaturen <0 °C zur Verfügung, lediglich die Froststabilität nach dem Aushärten ist verbessert.

In DE 738 394 A wird ein Verfahren zur Herstellung eines Mörtels zur Anwendung bei tiefen Temperaturen beschrieben. Dies wird durch das Zumischen von entwässertem Löschkalk in feiner Verteilung vor der Verwendung erreicht. Durch den entwässerten Löschkalk wird nach dem Anrühren eine signifikante Temperaturerhöhung erzielt. Als problematisch einzuschätzen ist, dass der Verarbeitungszeitraum des Mörtels erheblich reduziert ist und das beschleunigte Abbinden eine sehr zügige Verarbeitung voraussetzen, so dass eine Praxistauglichkeit fraglich erscheint.

Die Verwendung von polymeren Mikropartikeln zur Verbesserung der Frost und Frost-Tauwechselbeständigkeit von Zement und Beton ist Stand der Technik (DE 10 2006 009 823 A1, DE 22 29 094 A1). Durch die Bildung von Luftporen definierter Größe und Verteilung wird die Frostbeständigkeit deutlich verbessert. Allerdings wird durch den Zusatz der Mikropartikel keine wesentliche Verbesserung während der Verarbeitung bei tiefen Temperaturen ermöglicht, sondern betrifft lediglich den ausgehärteten Versatz.

Eine Variante, die auch das Arbeiten bei niedrigen Temperaturen zugänglich macht, ist die Abbindezeit eines angerührten Zements, Betons oder Mörtels zu verkürzen. Beispielsweise ist in DE 33 16 329 A1 die Verwendung eines schnell abbindenden hydraulischen Bindemittels beschrieben, so dass bereits am Anfang des Erstarrens hohe Festigkeiten erreicht werden. Hauptbestandteil des beschriebenen hydraulischen Bindemittels ist ein gemahlener Zementklinker mit unterschiedlichen Zusätzen. Nachteil eines beschleunigten Aushärtens stellt die verkürzte Verarbeitungszeit dar. Bei schnellem Aushärten ist das Anrühren einer üblich großen Menge nicht möglich, da die Verarbeitungszeit den limitierenden Faktor darstellt.

DD 253 992 A1 offenbart ein Verfahren zur Schnellhärtung von Betonen und Mörtel durch elektrische Erwärmung. Hierbei wird der zu erhärtende Beton oder Mörtel unter Nutzung seiner elektrischen Leitfähigkeit zur Aufheizung mit mindestens zwei potentialdifferenten Leitern kontaktiert und an eine elektrische Heizspannung angeschlossen. Dieses Verfahren kann bei der Fertigung von Bauelementen verwendet werden, eine Verwendung auf der Baustelle erscheint allerdings wenig praktikabel, durch den Zeitverlust bei einer Kontaktierung, sowie den Mangel an hierzu benötigter Ausrüstung auf einer Standardbaustelle. Das nach dem Anrühren des Mörtels bei tiefen Temperaturen teilweise Einfrieren des Versatzes (der dadurch unbrauchbar wird) wird durch das beschrieben Verfahren nicht verhindert.

Um ein schnelleres Abbinden zu ermöglichen und das Abkühlen des flüssigen Versatzes zu verlangsamen wird in DE 39 18 584 A1 eine Vorrichtung zum Erwärmen von fließfähigen Baustoffen beschrieben. Die Vorrichtung ermöglicht eine Erwärmung des Baustoffs im Durchfluss, wobei durch Zu- und Abschaltung vorhandener Generatorblöcke und Steuerung der Fließgeschwindigkeit die gewünschten Eigenschaften erzielt werden können. Der Einsatz einer solchen Vorrichtung Bedarf allerdings erheblichen Mehraufwand auf der Baustelle, so dass die Praktikabilität in Frage gestellt werden muss. Beispielsweise wird beim Aufmauern von Hochlochziegel aktuell üblicherweise deckelnder Dünnbettmörtel eingesetzt, der mit einem Mörtelschlitten aufgetragen wird. Die beschriebene Vorrichtung ist allerdings mit einem Mörtelschlitten nicht kompatibel und eine Verwendung der Vorrichtung für diese Anwendung ist nicht oder nur unter erschwerten Bedingungen möglich. Hinzu kommt, dass das Vorhandensein eines Stromanschlusses Voraussetzung für den Einsatz der Vorrichtung ist.

Auf organischer Basis (z.B. PU-Schaum) sind Formulierungen bekannt, die auch eine Verarbeitung bis -5 °C erlauben. Jedoch ist bei diesen Systemen die Frage der Langzeitstabilität, Brandschutz und Gefährdung für Mensch und Umwelt nicht ausreichend geklärt.

Teilweise behilft man sich aktuell auf Baustellen über provisorische Abdeckungen und durch das externe Zuführen von Wärme über elektrische Heizlüfter. Der Einsatz von Frostschutzmitteln oder chloridhaltigen Tausalzen ist nicht zulässig.

Die DE 10 2004 033 945 B4 offenbart ein Mörtelband zum Verkleben von Mauersteinen, Fliesen oder dergleichen, sowie ein Verfahren zu dessen Herstellung. Das Mörtelband besteht hierbei aus einem Trägerband und einer darauf aufgebrachten Mischung aus trockenem Zementmörtel, sowie einer bindenden Komponente, wobei der Hauptbestandteil der bindenden Komponente wasserlöslich ist, einen Schmelzpunkt zwischen 40 °C und 140 °C aufweist und mit dem Trägermaterial verbacken ist. Das beschriebene Mörtelband hat den Vorteil gegenüber Standardmörtel, dass der Mörtel nicht angerührt werden muss und somit einige Arbeitsschritte und Fehlerquellen bei der Verarbeitung wegfallen. Allerdings erlaubt der in der DE 10 2004 033 945 B4 dargelegte Stand der Technik keine Verarbeitung bei Temperaturen <0 °C.

Der dargestellte Stand der Technik verdeutlicht den Bedarf nach einem Verfahren zur Herstellung und Verwendung eines mineralischen Mörtels, der auch das Aufmauern auch bei Temperaturen <0 °C ermöglicht.

Ein Verfahren zum Trockenauftrag eines Mörtels oder Zements ist für Mörtelplatten oder Mörtelbänder bereits bekannt. Mörtelplatten und Mörtelbänder, die auf einen Baustoff aufgelegt werden und im Anschluss durch Wasserzusatz aktiviert werden, so dass ein Mörtelbrei entsteht und ein entsprechendes Vermauern ermöglicht, sind aus DE 10 2004 033 945 B4 bekannt. Der Prozess des Wasserzusatzes und die Bildung des Mörtelbreis wird nachfolgend als Aktivierung mit Wasser bezeichnet.

Dem Fachmann ist bekannt, dass selbst bei Minusgraden eine Aushärtung gewährleistet wird, sobald der Härtungsgrad die Poren schließt. Diese Festigkeit entsteht bereits nach wenigen Minuten (10-15 min) bei Temperaturen >0 °C, sofern der Mörtel keiner permanenten Scherung ausgesetzt ist.

### Darstellung der Erfindung

Aufgabe der vorliegenden Erfindung ist es daher einen Wintermörtel zur Verfügung zu stellen, der das Aufmauern bei Temperaturen <0 °C ermöglicht. Diese Aufgabe wird erfindungsgemäß durch den Wintermörtel gemäß unabhängigem Anspruch 1 gelöst. Weitere vorteilhafte Aspekte, Details und Ausgestaltungen der Erfindung ergeben sich aus den abhängigen Ansprüchen, der Beschreibung sowie den Zeichnungen.

Die vorliegende Erfindung stellt einen Wintermörtel in Form eines trockenen Mörtelauftrages insbesondere in Form eines Mörtelbandes, Mörtelplatte oder lose Mörtelaggregate zur Verfügung, wobei durch die Aktivierung mit Wasser eine Wärmemenge von mindestens 50 kj/kg Mörtel, bevorzugt mindestens 100 kJ/kg , besonders bevorzugt mindestens 150 kj/kg freigesetzt wird.

Bei dem erfindungsgemäßen Mörtel im Trockenauftragsverfahren, beispielsweise in Form von Mörtelplatten oder Mörtelbändern, wird nach der Aktivierung mit Wasser eine definierte Wärmemenge über einen definierten Zeitraum freigesetzt. Dadurch wird die Abkühlung des nach der Aktivierung mit Wasser gebildeten Mörtelbreis bei kalten Temperaturen deutlich verlangsamt und die für eine vollständige Aushärtung benötigten Festigkeiten erreicht.

Die Freisetzung der definierten Wärmemenge erfolgt durch mit Wasser exotherm reagierende Stoffe als Bestandteil des Mörtels im Trockenauftragsverfahren, beispielsweise in Form von trockenen Mörtelplatten und Mörtelbändern. Die exotherm mit Wasser reagierenden Stoffe induzieren nach der Aktivierung eine Wärmeentwicklung, die eine Verarbeitung auch bei tieferen Temperaturen erlaubt. Die exotherm mit Wasser reagierende Stoffe werden nachfolgend als thermisch aktive Komponente bezeichnet.

Die Erfindung ist nicht auf Mörtel die vor der Verarbeitung angerührt werden müssen oder Feuchtanlieferung über Silos übertragbar. Bei Mörteln, die vor der Verarbeitung angerührt werden müssen, würde der Zusatz von exotherm reagierenden Stoffen eine Wärmeentwicklung induzieren, die das Abbinden vor der Applikation beschleunigt und lediglich die Abbindezeit nach dem Anrühren beschleunigt. Der exotherme Effekt ist zeitlich begrenzt und deshalb beim Anrühren eines Mörtels nicht zielführend.

Bei der Verwendung eines Trockenauftrags kann vom Verarbeiter der Zeitpunkt der Aktivierung durch Bewässerung gezielt gewählt werden. In einer bevorzugten Ausführungsform wird nach und nach Wärme abgegeben, die es ermöglicht, bei Minusgraden mindestens während der ersten 10-15 min im Mörtelbrei eine Temperatur von > 0 °C zu gewährleisten.

In bevorzugten Ausführungsformen werden mit Wasser exotherm reagierende Salze als Bestandteil der Mörtelplatten und Mörtelbänder eingesetzt. Als besonders vorteilhaft hat sich ein Gewichtsanteil zwischen 1-30 Prozent herausgestellt. Besonders bevorzugt sind anorganische mit Wasser exotherm reagierende Salze, die keine nachteiligen Auswirkungen auf die Eigenschaften des ausgehärteten Mörtels hervorrufen.

Bevorzugt werden Salze mit einer Lösungsenthalpie <-20 kj/mol eingesetzt, besonders bevorzugt Salze und Salzmischungen mit einer Lösungsenthalpie <-40 kj/mol. Beispiele typischer Ausführungsformen sind CaCl₂ (Lösungsenthalpie -82 kj/mol), CaO (Lösungsenthalpie -65 kj/mol) oder NaOH (Lösungsenthalpie -44 kj/mol). Diese Salze werden nachfolgend als thermisch aktive Salzkomponente bezeichnet.

Bevorzugt sind weiterhin Salze, die nach der Wasserzugabe und der Wärmeabgabe eine Verbindung ausbilden, die in konventionellem Dünnbettmörtel vorhanden ist. In einigen bevorzugten Ausführungsformen wird dem Mörtel im Trockenauftragsverfahren bzw. der trockenen Mörtelplatte oder des Mörtelbandes CaO zugesetzt. Nach der Reaktion mit Wasser bildet sich Kalkhydrat aus.

In einigen bevorzugten Ausführungsformen handelt es sich bei der thermisch aktiven Komponente um einen Zeolith.

In weiteren Ausführungsformen handelt es sich bei den thermisch aktiven Komponenten um Metalle, bevorzugt um Aluminium, Eisen, Kalzium oder Magnesium bzw. Mischungen davon. In einigen Ausführungsformen entsteht die Wärme nach der Wasserzugabe im basischen Milieu, insbesondere bei der Anwesenheit von Luftsauerstoff.

In bestimmten Ausführungsformen ist dem Anmachwasser ein Additiv zugesetzt, das zur Aktivierung der thermisch aktiven Komponente beiträgt.

Der erfindungsgemäße Verbund aus Mörtel und thermisch aktiver Komponente kann in einigen bevorzugten Ausführungsformen durch ein Heißpressverfahren erzielt werden. Der Verbund wird durch einen wasserlöslichen Schmelzkleber erhalten, bevorzugt weist der Schmelzkleber einen Schmelzpunkt < 200 °C auf. Besonders bevorzugt werden für den Schmelzkleber eutektische Mischungen eingesetzt. Selbstverständliche ist der erfindungsgemäße Wintermörtel nicht auf das Heißpressverfahren beschränkt.

In einigen bevorzugten Ausführungsformen werden Mörtelplatten angefertigt, die den gängigen Abmessungen von Planhochlochziegeln (Länge und Breite) entsprechen. Zur zusätzlichen Stabilisierung der Mörtelplatte können Glasfasergewebe eingesetzt werden.

In bevorzugten Ausführungsformen werden thermisch aktive Salzkomponenten mit einem Gewichtsanteil bezogen auf das Gesamtgewicht der trockenen Mörtelplatte zwischen 1-30 Prozent eingesetzt. In besonders bevorzugten Ausführungsformen wird CaO eingesetzt mit einem Gewichtsanteil bezogen auf das Gesamtgewicht der trockenen Mörtelplatte zwischen 1-25 Prozent. Vorteilhaft ist es thermisch aktive Salzkomponenten mit einer mittleren Korngröße (Gewichtsmittel) zwischen 10 Mikrometern und 10000 Mikrometern zu verwenden.

Gemäß einer besonders bevorzugten Ausführungsform der vorliegenden Erfindung enthält der Wintermörtel CaO in einer Menge, die über das bei Trockenmörtel bekannte Maß hinausgeht. Bekanntermaßen reagiert CaO mit Wasser in einer exothermen Reaktion zu Ca(OH)₂. Diese exotherme Reaktion kann in der oben erläuterten Weise genutzt werden, um eine Verarbeitung des Wintermörtels auch bei tieferen Temperaturen zu ermöglichen. Bezogen auf das Gesamtgewicht des Trockenmörtels ist gemäß besonders bevorzugten Ausführungsformen CaO in einem Anteil von 5 Gew% bis 50 Gew% enthalten, insbesondere in einem Anteil von 7,5 Gew% bis 40 Gew%, insbesondere bevorzugt in einem Anteil von 10 Gew% bis 30 Gew% und ganz besonders bevorzugt in einem Anteil von 15 Gew% bis 25 Gew%. Umfangreiche experimentelle Untersuchungen haben weitere bevorzugte Wertebereiche für den Anteil an CaO bezogen auf das Gesamtgewicht des Trockenmörtels zu 7,5 Gew% bis 50 Gew%, 10 Gew% bis 40 Gew%, 15 Gew% bis 30 Gew% und 20 Gew% bis 25 Gew%. Weitere bevorzugte Bereiche sind 5 Gew% bis 30 Gew%, 7,5 Gew% bis 25 Gew%, 10 Gew% bis 20 Gew% und 12,5 Gew% bis 17,5 Gew%.

Weiterbildungen, Vorteile und Anwendungsmöglichkeiten der Erfindung ergeben sich auch aus der nachfolgenden Beschreibung von Ausführungsbeispielen und aus den Figuren. Dabei sind alle beschriebenen und/oder bildlich dargestellten Merkmale für sich oder in beliebiger Kombination grundsätzlich Gegenstand der Erfindung, unabhängig von ihrer Zusammenfassung in den Ansprüchen oder deren Rückbeziehung.

### Kurze Beschreibung der Zeichnungen

Die Erfindung soll nachfolgend anhand von Ausführungsbeispielen im Zusammenhang mit den Zeichnungen näher erläutert werden. Es zeigen
- Fig. 1: den Temperatur-Zeit Verlauf gemäß Beispiel 3;
- Fig. 2: den Temperatur-Zeit Verlauf gemäß Beispiel 4;
- Fig. 3: den Temperatur-Zeit Verlauf gemäß Beispiel 5;
- Fig. 4: den Temperatur-Zeit Verlauf gemäß Beispiel 6;
- Fig. 5: den Temperatur-Zeit Verlauf gemäß Beispiel 7.

### Wege zur Ausführung der Erfindung

### Beispiel 1: Herstellung Mörtelplatten

Mörtelplatten der Abmessungen 250 mm x 365 mm x 4 mm wurden hergestellt, mit einer Gesamthöhe von etwa 4 mm. Außerdem wurden noch Stege mit 2 mm Überhöhung integriert, um eine verbesserte Bewässerung zu gewährleisten. Zum besseren Verbund der Mörtelplatten wurde ein wasserlöslicher Schmelzkleber verwendet. Der Versatz für die Herstellung der Mörtelplatte enthielt Standarddünnbettmörtel, Harnstoff und Magnesiumacetat, sowie Schnellzement und Kalkhydrat. Die Mörtelplatten wurden in einem Heisspressverfahren hergestellt. Zur besseren Stabilisierung der gepressten Mörtelplatte wurde außerdem ein textiles Flächengewebe (Textilglasgittergewebe, Maschenweite 5,5 x 5,5 mm, 60 g/m²) verwendet. Nach der Herstellung wog eine Mörtelplatte zwischen 240 g und 260 g. Die fertig hergestellt Mörtelplatte wurde zur Konservierung in Folie verschweißt und unmittelbar vor der Verwendung entnommen.

### Beispiel 2: Wasserbedarf und Bewässerung einer Mörtelplatte

Zur Bewässerung wurden die Mörtelplatten im trockenen Zustand auf die Lagerfugenfläche des Mauersteins aufgelegt und anschließend mit einer festgelegten Menge Wasser aktiviert. Pro 100 g Trockenmörtel werden ca. 75 g Wasser benötigt, dies entspricht einem Wasser/Trockenmörtelverhältnis von etwa 0,75. In dieser Ausführung wurden die Mörtelplatten auf Planhochlochziegel der Abmessungen 25 cm x 36,5 cm aufgelegt und mit der entsprechenden Menge an Wasser bewässert. Nach einer Einwirkdauer von ca. 1 min bildete sich ein Mörtelbrei aus, Planhochlochziegel oben genannter Abmessung wurden aufgesetzt, ausgerichtet und mit einem Gummihammer in das Mörtelbett gedrückt.

### Beispiel 3: Temperatur-Zeit Verlauf nach Bewässerung konventioneller Mörtelplatten bei Raumtemperatur ohne Mauerwerk

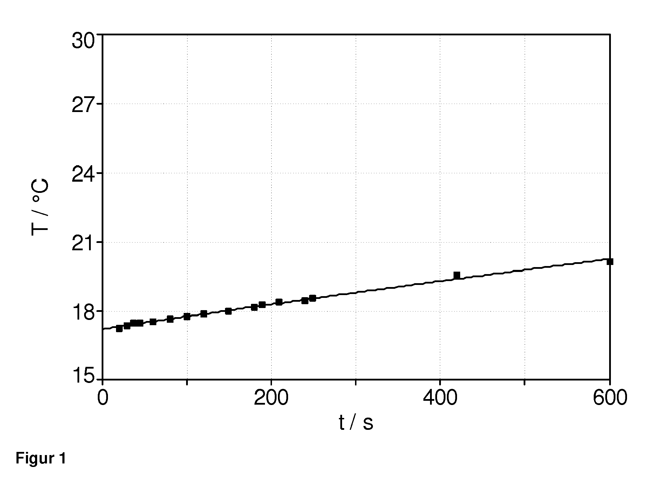

Zur Abschätzung des Temperatur-Zeit Verlaufs ohne den Zusatz thermisch aktiver Salzkomponenten wurden Mörtelplatten gemäß Beispiel 1 hergestellt. Eine Mörtelplatte von ca. 250 g wurde auf eine Kunststoffoberfläche aufgelegt und mit 200 g Wasser bewässert. Unmittelbar nach der Bewässerung wurde ein Temperaturfühler im Mörtelbett platziert und die Temperatur als Funktion der Zeit aufgezeichnet. Durch den isolierenden Effekt der Kunststoffplatte wurde eine Ableitung von Wärmetönungen über den Untergrund weitgehend vermieden. Es wurden Wasser und Mörtelplatte bei Raumtemperatur (21,5 °C) verwendet. In Figur 1 ist der Temperatur-Zeit Verlauf dargestellt. Zunächst wurde eine schwache (< 5 °C) Temperaturabnahme unmittelbar nach der Bewässerung verzeichnet, nach 10 Minuten hatte das Mörtelbett wieder Raumtemperatur erreicht.

### Beispiel 4: Temperatur-Zeit Verlauf nach Bewässerung und Vermauern konventioneller Mörtelplatten bei Raumtemperatur.

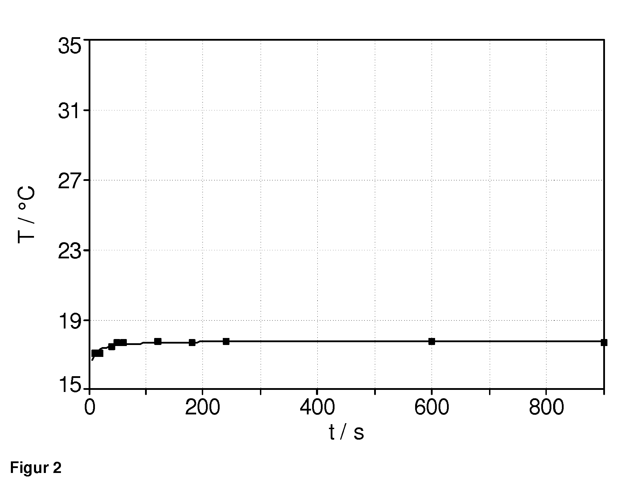

Zur Abschätzung des Temperatur-Zeit Verlaufs ohne den Zusatz thermisch aktiver Salzkomponenten wurden Mörtelplatten gemäß Beispiel 1 hergestellt. Die Mörtelplatte wurde bei einer Außentemperatur von 21,5 °C auf einen Planhochlochziegel (Temperatur Mauerwerk: 16,5 °C) der Abmessungen 25 cm x 36,5 cm aufgelegt und mit 250 g Wasser einer Temperatur von 21,3 °C bewässert. Nach der Ausbildung des Mörtelbreis wurde ein zweiter Ziegel genannter Abmessung aufgesetzt und mit einem Gummihammer in das Mörtelbett geschlagen. Unmittelbar danach wurde ein Temperaturfühler in der Mörtelfuge platziert und der Temperatur-Zeit Verlauf aufgezeichnet. Der Verlauf ist in Figur 2 wiedergegeben. Aus Beispiel 3 ist bekannt, dass das Mörtelband nach Bewässerung etwa auf eine Temperatur von 17 °C abkühlt. Diese Temperatur bleibt im Anschluss aufgrund der Temperatur des Mauerwerks weitgehend konstant.

### Beispiel 5: Temperatur-Zeit Verlauf nach Bewässerung konventioneller Mörtelplatten mit warmem Wasser und Vermauern bei Raumtemperatur

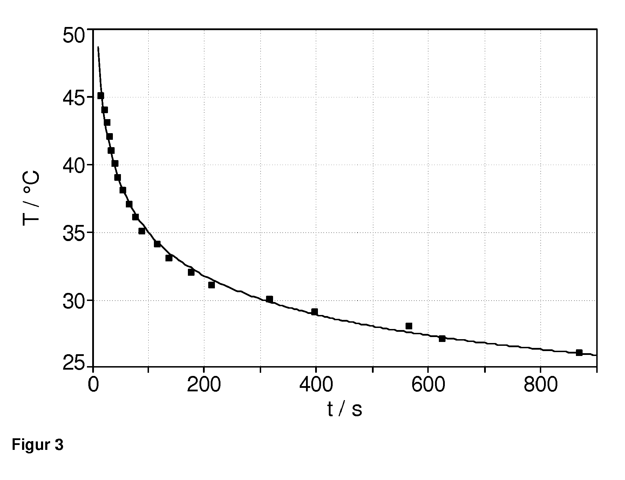

Mörtelplatten mit einem mittleren Gewicht von 300 g wurden gemäß dem in Beispiel 1 beschriebenen Verfahren hergestellt. Die Mörtelplatte wurde bei einer Außentemperatur von 25 °C auf einen Planhochlochziegel der Abmessungen 25 cm x 36,5 cm aufgelegt und mit 250 g warmen Wasser bewässert. Nach der Ausbildung des Mörtelbreis wurde ein zweiter Ziegel genannter Abmessung aufgesetzt und mit einem Gummihammer in das Mörtelbett geschlagen. Unmittelbar im Anschluss wurde ein Temperaturfühler in der Mörtelfuge platziert und der Temperatur-Zeit Verlauf aufgezeichnet. Dieser Verlauf ist in Figur 3 wiedergegeben. Aus diesem Verlauf lässt sich ermitteln, wie lange es dauert bei einer gegebenen Temperaturdifferenz des Mörtelbreis im Vergleich zur Außentemperatur wieder auf die Umgebungstemperatur zu relaxieren. Diese Abschätzung erlaubt es auch zu ermitteln, welche Temperaturdifferenz bei einem vorgegeben Zeitintervall benötigt wird, um bei einer Außentemperatur von -5 °C wieder 0 °C zu erreichen. Diese Zeitintervalle als Funktion der Temperaturdifferenz sind in Tabelle 1 exemplarisch für drei Wertepaare aufgezeigt:

**Tabelle 1. Abschätzung, wie lange es dauert bei einer Temperaturdifferenz ΔT im Vergleich zur Außentemperatur, T_{A}, (wobei die Außentemperatur kleiner ist, als die Temperatur des Mörtelbreis) eine Temperatur des Mörtelbreis von (T_{A}+ 5 °C) zu erzielen.**

| Δ*T*/°C | *t* / *min* |
|---|---|
| *15* | *9* |
| *10* | *8.5* |
| *5* | *6.5* |

Mit einer spezifischen Wärmekapazität von Wasser von 4,2 J/K·g, einer Temperaturdifferenz von 50 K und einer Bewässerung mit 250 g Wasser ergibt sich beispielsweise eine Wärmemenge von 52,5 kJ. Diese Wärmemenge wird zum Beispiel bei der Reaktion von etwa 45 g CaO mit Wasser freigesetzt. Bei einer Gesamtmasse von 300 g Mörtelplatte entspricht dies etwa 15 Gew%.

### Beispiel 6: Temperatur-Zeit Verlauf nach Bewässerung von Mörtelplatten, die thermisch aktive Salzkomponenten beinhalten, bei Raumtemperatur ohne Mauerwerk.

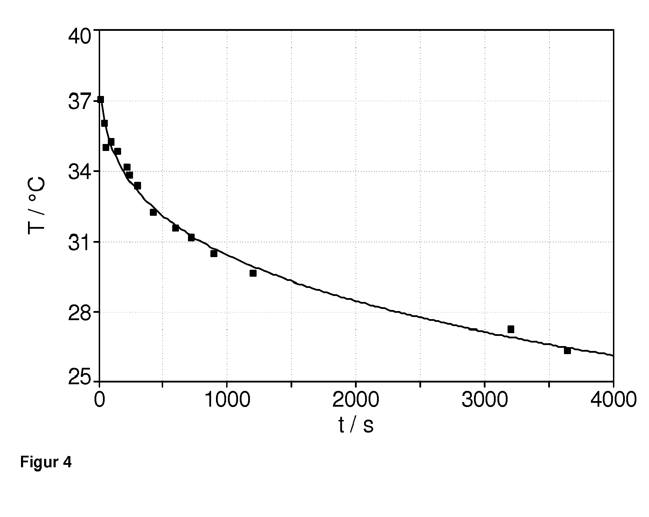

Zur Abschätzung des Temperatur-Zeit Verlaufs mit dem Zusatz thermisch aktiver Salzkomponenten wurde ein Versatz gemäß Beispiel 1 hergestellt. Dem Versatz wurden zusätzlich 25 Gew% Calciumchlorid-Dihydrat zugesetzt. Im Anschluss wurden Mörtelplatten gemäß dem in Beispiel 1 beschriebenen Herstellungsverfahren hergestellt. Eine Mörtelplatte von ca. 300 g wurde auf eine Kunststoffoberfläche aufgelegt und mit 225 g Wasser bewässert. Unmittelbar nach der Bewässerung wurde ein Temperaturfühler im Mörtelbett platziert und die Temperatur als Funktion der Zeit aufgezeichnet. Durch den isolierenden Effekt der Kunststoffplatte wurde eine Ableitung von Wärmetönungen über den Untergrund weitgehend vermieden. Es wurden Wasser und Mörtelplatte bei Raumtemperatur (24 °C) verwendet. In Figur 4 ist der Temperatur-Zeit verlauf dargestellt. Es wird deutlich, dass eine exotherme Reaktion stattfindet, die Mörtelplatte wird bereits nach wenigen Sekunden nach der Bewässerung auf eine Temperaturen von > 35 °C erwärmt. Wie in Figur 4 ersichtlich fällt die Temperatur als Funktion der Zeit ab. Eine Temperaturdifferenz von mindestens 5 °C im Vergleich zur Raumtemperatur ist auch noch nach 20 Minuten gegeben.

### Beispiel 7: Temperatur-Zeit Verlauf nach Bewässerung von Mörtelplatten, die thermisch aktive Salzkomponenten beinhalten, bei Raumtemperatur

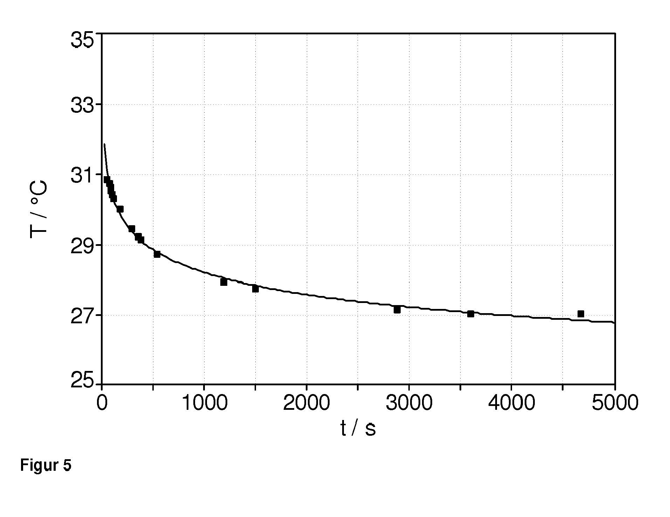

Mörtelplatten gemäß Beispiel 6 wurden hergestellt. Eine Mörtelplatte von ca. 300 g wurde bei einer Außentemperatur von 24 °C auf einen Planhochlochziegel der Abmessungen 25 cm x 36,5 cm aufgelegt und mit 230 g Wasser (23.5 °C) bewässert. Nach der Ausbildung des Mörtelbreis wurde ein zweiter Ziegel genannter Abmessung aufgesetzt und mit einem Gummihammer in das Mörtelbett geschlagen. Unmittelbar danach wurde ein Temperaturfühler in der Mörtelfuge platziert und der Temperatur-Zeit Verlauf aufgezeichnet. Der Verlauf ist in Figur 5 wiedergegeben. Wie aus Figur 5 ersichtlich ist selbst nach 60 Minuten die Temperatur im Mörtelbett noch oberhalb der Temperatur des Mauerwerks.

### Beispiel 8: Verarbeitung bei tiefen Temperaturen

Mörtelplatten wurden gemäß dem in Beispiel 1 beschriebenen Verfahren hergestellt. Zusätzlich wurde dem Versatz vor dem Heißpressverfahren fein gekörntes CaO mit einem Gewichtsanteil von 15 Gew% zugesetzt, bei einem Gesamtgewicht einer Mörtelplatte von 300 g. Die Mörtelplatte wurde bei einer Außentemperatur von -5 °C auf einen Planhochlochziegel der Abmessungen 25 cm x 36,5 cm aufgelegt und mit 250 g Wasser bewässert. Nach der Ausbildung des Mörtelbreis wurde der obere Stein aufgesetzt, ausgerichtet und mit einem Gummihammer in das Mörtelbett gedrückt. Haftscherexperimente an Dreisteinprüfkörpern ohne Auflast senkrecht zur Lagerfuge im Alter von 28 Tagen ergaben maßgebende Haftscherfestigkeiten von > 0,3 N/mm².

## Patentansprüche

1. Wintermörtel in Form eines trockenen Mörtelauftrages insbesondere in Form eines Mörtelbandes, Mörtelplatte oder lose Mörtelaggregate, **dadurch gekennzeichnet dass** durch die Aktivierung mit Wasser eine Wärmemenge von mindestens 50 kj/kg Mörtel, bevorzugt mindestens 100 kJ/kg , besonders bevorzugt mindestens 150 kj/kg freigesetzt wird.

2. Wintermörtel gemäß Anspruch 1, **dadurch gekennzeichnet, dass** die Wärmefreisetzung auf einer exothermen Reaktion eines Metalls, eines anorganischen Salzes bzw. Mischungen anorganischer Salze oder eines mineralischen Rohstoffes mit Wasser beruht.

3. Wintermörtel gemäß Anspruch 1 oder 2, **dadurch gekennzeichnet, dass** die anorganischen Salze ausgewählt aus der Gruppe Erdalkalisalze, insbesondere deren Oxiden, Hydroxiden oder deren Mischungen sind.

4. Wintermörtel gemäß Anspruch 1 oder 2, **dadurch gekennzeichnet, dass** die Metalle Aluminium, Eisen, Kalzium oder Magnesium, bzw. Mischungen davon sind.

5. Wintermörtel gemäß Anspruch 1 oder 2, **dadurch gekennzeichnet, dass** der mineralische Rohstoff ein Zeolith ist.

6. Wintermörtel gemäß einem der Ansprüche 1 bis 3, **dadurch gekennzeichnet, dass** das anorganische Salz CaO ist.

7. Wintermörtel gemäß einem der Ansprüche 1 bis 4, **dadurch gekennzeichnet, dass** der Gehalt an CaO zwischen 1-25 Gewichtsprozent beträgt, bezogen auf das Gesamtgewicht der trockenen Mörtelplatte, besonders bevorzugt 5-17 Gewichtsprozent.

8. Wintermörtel gemäß einem der Ansprüche 1 bis 5, **dadurch gekennzeichnet, dass** zur gleichmäßigen Temperaturfreisetzung gezielt die Korngrößen des exotherm mit Wasser reagierenden Additivs eingestellt werden.

9. Wintermörtelband bzw. -platte aufweisend einen Wintermörtel gemäß Anspruch 1 bis 8, **dadurch gekennzeichnet, dass** die Abmessungen der Platte auf die Abmessungen eines Planziegels zugeschnitten sind.

10. Verfahren zur Herstellung eines Wintermörtels gemäß Anspruch 1 bis 8, **dadurch gekennzeichnet, dass** der Wintermörtel in einem Heißpressverfahren hergestellt wird, wobei ein wasserlöslicher Schmelzkleber als bindende Komponente, bevorzugt eutektische Mischungen aus Harnstoff und Magnesiumacetat, eingesetzt wird.

11. Verfahren zur Verarbeitung eines Wintermörtels gemäß Anspruch 1 bis 8, **dadurch gekennzeichnet, dass** die Verarbeitung folgende Schritte beinhaltet:
- Aufbringen des Trockenmörtels auf Mauerstein,
- Aktivierung mit Wasser,
- Einwirken, bevorzugte Einwirkdauer zwischen 1 bis 6 Minuten,
- Aufsetzen oberer Mauerstein,
- Ausrichten und Eindrücken in Mörtelbett.

12. Verfahren zur Verarbeitung eines Wintermörtels nach Anspruch 11, **dadurch gekennzeichnet, dass** bei der Aktivierung ein Wasser/Trockenmörtelverhältnis zwischen 0,6 und 0,9 verwendet wird.

13. Verfahren zur Verarbeitung eines Wintermörtels nach Anspruch 11 oder Anspruch 12, **dadurch gekennzeichnet, dass** Mauersteine mit Wärmeleitfähigkeiten <0,15 W/(mK) verwendet werden.
